# EUROPÄISCHE PATENTANMELDUNG

(11) **EP 1 780 666 A1**
(43) Veröffentlichungstag der Anmeldung: **02.05.2007**
(21) Anmeldenummer: 05023207.3
(22) Anmeldetag: 25.10.2005
(51) Int. Cl.: G06Q 10/00

(54) **Verfahren zur automatischen Unterstützung eines Benutzers bei der Auswahl eines Produkts in einem Online-Shop**

(71) Anmelder: HURRA Communications GmbH, 70599 Stuttgart (DE)
(72) Erfinder: Schweier, René, 70599 Stuttgart (DE)
(74) Vertreter: Wörz, Volker Alfred

(57) **Zusammenfassung**

Eine erfolglose Anforderung von Informationen von einem Online-Shop (2a; 2b) mittels eines Clients (7) wird üblicherweise zu einem späteren Zeitpunkt von einer weiteren Anforderung von Informationen bezüglich desselben oder eines ähnlichen Produkts gefolgt. Eine derartige, erneute Anforderung von Informationen belastet sowohl das Kommunikationsnetzwerk (3) als auch den Client (7) und den Online-Shop (2a; 2b). Um einen Benutzer (8) bei der Auswahl eines Produkts in einem Online-Shop (2a; 2b) derart zu unterstützen, dass eine möglichst geringe Auslastung des Kommunikationsnetzwerks (3), des Online-Shops (2a; 2b) und des Clients (7) erreicht wird, wird vorgeschlagen, dass automatisch eine Anfrage von einem Server (18) an den Client (7) übermittelt wird, der Benutzer (8) die Anfrage beantwortet und die Antwort an den Server (18) übermittelt wird, der Server (18) die Antwort automatisch auswertet und in Abhängigkeit von dem Ergebnis der Auswertung automatisch die Übermittelung einer dem Produkt zugeordneten Information an den Benutzer (8) veranlasst wird.

## Beschreibung

Die Erfindung betrifft ein Verfahren zur automatischen Unterstützung eines Benutzers bei der Auswahl eines Produkts in einem Online-Shop, wobei der Benutzer mittels eines dem Benutzer zugeordneten Clients eine Information von dem Online-Shop anfordert, die Information von dem Online-Shop an den Client übermittelt und dem Benutzer angezeigt wird und der Benutzer eine der Information zugeordnete durchführbare Aktion nicht durchführt.

Die Erfindung betrifft auch ein Client-Server-System zur automatischen Unterstützung eines Benutzers bei der Auswahl eines Produkts in einem Online-Shop, wobei dem Benutzer ein Client zugeordnet ist, der Client und ein Server mit einem Kommunikationsnetzwerk verbunden sind, der Online-Shop mindestens eine Information zum Abruf durch den Client bereithält, der Client Mittel zur Darstellung der an diesen übermittelten Information aufweist, und der Information eine durchführbare Aktion zugeordnet ist.

Die Erfindung betrifft auch ein Computerprogramm, das auf einem Client-Server-System, insbesondere auf einem Client und/oder auf einem als Online-Shop ausgebildeten Server ausführbar ist.

Ein Online-Shop umfasst typischerweise einen oder mehrere Server, die an ein Kommunikationsnetzwerk angeschlossen sind und von einem Anbieter von Produkten, beispielsweise Waren, Dienstleistungen oder Informationen, betrieben wird. Heutzutage wird als Kommunikationsnetzwerk häuft das so genannte Internet verwendet. Dem Online-Shop sind Netzwerkseiten zugeordnet, die von einem ebenfalls mit dem Kommunikationsnetzwerk verbundenen Client angefordert werden können. Derartige Netzwerkseiten werden auch als so genannte Web-Pages bezeichnet und enthalten Informationen bezüglich der angebotenen Produkte, beispielsweise Verkaufspreis, technische Details und grafische Darstellungen des Produkts.

Ein Benutzer des Clients kann ein von dem Online-Shop angebotenes Produkt dadurch kaufen, dass er mittels des Clients beispielsweise eine das Produkt beschreibende Netzwerkseite von dem Online-Shop anfordert, das Produkt auswählt und eine als Bestellvorgang ausgebildete, dem Produkt beziehungsweise der Netzwerkseite zugeordnete durchführbare Aktion durchführt.

Die von dem Online-Shop angebotenen Produkte können insbesondere auch Informationen sein. Derartige Information sind beispielsweise Nachrichten, Börsenberichte, Bilder oder Musikdateien.

Auch der Zugang zu Informationen an sich kann als Produkt eines Online-Shops angesehen werden. Beispielsweise kann von dem Online-Shop ein Zugang zu einem geschützten Bereich angeboten werden. Ein Benutzer bestellt ein derartiges Produkt beispielsweise dadurch, dass er sich bei dem Online-Shop registriert. Der geschützte Bereich kann Informationen enthalten, die nur von den registrierten Benutzern angefordert beziehungsweise an diese übermittelt werden können. Die Bestellung eines Produkts geht damit in dem hier verwendeten Bedeutungsinhalt über das hinaus, was üblicherweise unter dem Kauf eines Produkts verstanden wird. Insbesondere ist die Bestellung eines Produkts nicht notwendigerweise an die Bezahlung eines Kaufpreises gebunden.

Die von dem Online-Shop an den Client übermittelbaren Netzwerkseiten sind üblicherweise in einem dem Online-Shop zugeordneten Speicherbereich abgespeichert oder werden dynamisch in Abhängigkeit der Anforderung durch einen Client beziehungsweise einen Benutzer erzeugt.

Zur Beschreibung des Inhalts einer Netzwerkseite wird eine so genannte Seitenbeschreibungssprache, beispielsweise HTML (Hypertext Markup Language), verwendet. HTML erlaubt es, den Inhalt und das Aussehen einer Netzwerkseite in Form eines so genannten HTML-Dokuments zu beschreiben. Ein von dem Online-Shop an den Client übermitteltes HTML-Dokument wird von einem auf dem Client ablaufenden Computerprogramm, beispielsweise einem so genannten Browser, interpretiert und auf einem dem Client zugeordneten Monitor dem Benutzer dargestellt.

Dem Online-Shop ist häufig eine so genannte Suchmaschine zugeordnet. Eine Suchmaschine ist ein mit dem Kommunikationsnetzwerk verbundener Server oder ein auf dem Online-Shop ablaufendes Computerprogramm, an das der Benutzer mittels des Client eine Anfrage in Form eines Suchbegriffs sendet. Die Suchmaschine ermittelt anhand vorgebbarer Regeln in Abhängigkeit von dem übermittelten Suchbegriff Informationen, die mit dem Suchbegriff assoziiert werden. Die Suchmaschine veranlasst, dass die so ermittelten Informationen (das Suchergebnis) beispielsweise mittels einer Netzwerkseite an den Client übermittelt werden. Hierzu wird häufig in Abhängigkeit von den ermittelten Informationen automatisiert ein HTML-Dokument von der Suchmaschine erzeugt und an den Client übermittelt. Eine einem Online-Shop zugeordnete Suchmaschine wird auch als Produktsuchmaschine bezeichnet.

Ein Online-Shop stellt häufig auch die Funktionalität eines Warenkorbs zur Verfügung. Dies ermöglicht es einem Benutzer, ausgewählte Produkte vorzumerken und mittels eines einzigen Bestellvorgangs die Bestellung beziehungsweise den Kauf einzuleiten.

Das Hineinlegen eines ausgewählten Produkts in den Warenkorb oder das Einleiten eines Bestellvorgangs sind Beispiele für durchführbare Aktionen, die einem Produkt zugeordnet sein können. Derartige Aktionen sind insbesondere den Informationen zugeordnet, die mittels des Clients von dem Online-Shop angefordert werden können und ein oder mehrere Produkte betreffen.

Häufig fordert ein Benutzer mehrere Informationen bezüglich unterschiedlichster Produkte von einem Online-Shop an, ohne eines der Produkte auszuwählen, in den Warenkorb zu legen oder einen Bestellvorgang einzuleiten, also ohne eine dem Produkt beziehungsweise der angeforderten Information zugeordnete durchführbare Aktion durchzuführen. Gründe hierfür können beispielsweise sein, dass ein bestimmtes Produkt nicht in dem Online-Shop gefunden wurde oder ein gefundenes Produkt selbst beziehungsweise ein oder mehrere dem Produkt zugeordneten Merkmale nicht den Vorstellungen des Benutzers entsprechen. In diesen Fällen bricht der Benutzer beispielsweise den Einkauf in dem Online-Shop oder die Produktsuche erfolglos ab. Sehr häufig wird jedoch zu einem späteren Zeitpunkt erneut in demselben oder einem anderen Online-Shop nach diesem oder einem ähnlichen Produkt gesucht beziehungsweise werden erneut Suchbegriffe an Produktsuchmaschinen übermittelt, um weitere Informationen bezüglich des gesuchten Produkts zu erhalten.

Unter einem erfolglosen Einkauf in einem Online-Shop kann folglich jede Anforderung von einem Online-Shop bezüglich eines Produkts beziehungsweise von einer Produktsuchmaschine bezeichnet werden, die nicht zu einer Bestellung eines Produkts führt. Im weitesten Sinne kann eine Anforderung von Informationen von einem Online-Shop dann als erfolglos bezeichnet werden, wenn eine bestimmte, der Information beziehungsweise einem Produkt zugeordnete Aktion nicht durchgeführt wird.

Da eine erfolglose Anforderung von Informationen von einem Online-Shop üblicherweise zu einem späteren Zeitpunkt von einer weiteren Anforderung von Informationen bezüglich desselben oder eines ähnlichen Produkts gefolgt ist und eine derartige, erneute Anforderung von Informationen sowohl das Kommunikationsnetzwerk als auch den Client und den Online-Shop beziehungsweise die Produktsuchmaschine belasten, ist es Aufgabe der vorliegenden Erfindung, eine Möglichkeit bereitzustellen, um einen Benutzer bei der Auswahl eines Produkts in einem Online-Shop derart zu unterstützen, dass eine möglichst geringe Belastung des Kommunikationsnetzwerks, des Online-Shops und des Clients erreicht wird.

Die Aufgabe wird durch ein Verfahren der eingangs genannten Art dadurch gelöst, dass automatisch eine Anfrage von einem Server an den Client übermittelt wird, der Benutzer die Anfrage beantwortet und die Antwort an den Server übermittelt wird, der Server die Antwort automatisch auswertet und in Abhängigkeit von dem Ergebnis der Auswertung automatisch die Übermittelung einer dem Produkt zugeordneten Information an den Benutzer veranlasst wird. Der Server kann beispielsweise als der Online-Shop ausgebildet oder diesem zugeordnet sein.

Erfindungsgemäß wird folglich beispielsweise ein Einkauf bei einem Online-Shop nicht notwendigerweise dadurch erfolglos beendet, dass ein Benutzer ein Produkt nicht findet oder ein vorgemerktes, beispielsweise in den Warenkorb gelegtes Produkt nicht kauft. Vielmehr wird von einem Server, der beispielsweise der Online-Shop selbst oder eine dem Online-Shop zugeordnete Produktsuchmaschine sein kann, das Nicht-Durchführen der Aktion, also beispielsweise der Abbruch des Einkaufs, erkannt. Daraufhin sendet der Server eine Anfrage an den Client. Die Anfrage kann beispielsweise beschreiben, ob der Benutzer grundsätzlich an weiteren Informationen bezüglich des ausgewählten Produkts interessiert ist. Bejaht der Benutzer diese Anfrage, so kann der Server selbstständig weitere Informationen bezüglich des Produkts suchen und an den Benutzer beziehungsweise den Client übermitteln.

Der Benutzer muss folglich nicht mittels des Clients zu einem späteren Zeitpunkt erneut die Dienste einer Produktsuchmaschine bemühen beziehungsweise das Produktsortiment eines Online-Shops durchsuchen, um weitere Informationen zu dem angewählten Produkt oder dem gesuchten Produkt zu erhalten. Vielmehr sucht der Server automatisch, beispielsweise zu gegebenem Zeitpunkt, nach weiteren Informationen und veranlasst die Übermittlung dieser Informationen an den Client. Damit kann eine deutliche Verringerung der Belastung des Kommunikationsnetzwerks erreicht werden, da der Client keine weiteren Anfragen an den Online-Shop oder an die Produktsuchmaschine richten muss. Vielmehr wird automatisch die Übermittlung von Informationen bezüglich des Produkts an den Client veranlasst, beispielsweise sobald diese Informationen zur Verfügung stehen.

Ferner wird mit dem erfindungsgemäßen Verfahren eine Reduzierung der Belastung des Online-Shops beziehungsweise der Produktsuchmaschine dadurch erreicht, dass der Benutzer beziehungsweise der Client nicht erneut selbstständig nach weiteren Informationen bezüglich des Produkts sucht.

Vorzugsweise umfasst die Beantwortung der Anfrage eine Beschreibung des Produkts und/oder den Grund für die Nicht-Durchführung der Aktion. Hierzu kann die Anfrage beispielsweise formularartig vorgegebene Antworten beinhalten, die der Benutzer durch Markierung beantworten kann. Ein Grund für die Nichtdurchführung der Aktion kann beispielsweise sein, dass eine Lieferzeit zu lange ist, ein Merkmal des Produkts nicht mit den Vorstellungen des Benutzers übereinstimmt oder ein Produkt beispielsweise in dem Online-Shop überhaupt nicht gefunden wurde. Dadurch, dass die Beantwortung der Anfrage derartige Informationen umfasst, kann die Antwort besonders gut ausgewertet werden und eine dem Produkt zugeordnete Information ausgewählt und an den Benutzer übermittelt werden. Eine derartige Information könnte beispielsweise die Nennung eines anderen Online-Shops sein, der das gesuchte Produkt in einer kürzeren Lieferzeit liefern kann oder der ein Produkt mit all den Merkmalen verfügbar hat, die sich der Benutzer vorstellt oder der überhaupt das von dem Benutzer gesuchte Produkt verfügbar hat.

Der Benutzer muss folglich nicht bei weiteren Online-Shops oder anderen Produktsuchmaschinen selbstständig nach dem Produkt suchen, vielmehr wird ihm durch Übermittlung der dem Produkt zugeordneten Information mitgeteilt, wo das Produkt bestellt werden kann oder wann das gesuchte Produkt verfügbar ist. Dies bedeutet einerseits eine Zeitersparnis und andererseits eine geringere Belastung des Kommunikationsnetzwerks sowie weiterer möglicherweise involvierter Online-Shops beziehungsweise Produktsuchmaschinen.

Vorzugsweise beschreibt die dem Produkt zugeordnete Information eine Verfügbarkeit, eine Lieferzeit, einen Kaufpreis oder einen Rabatt.

Vorzugsweise erfolgt die Auswahl der dem Produkt zugeordneten Information in Abhängigkeit von mindestens einem weiteren Kriterium. Ein derartiges Kriterium beschreibt beispielsweise die Art des Produkts, ein Verhalten des Benutzers, ein von dem Client übermittelter Suchbegriff, ein in einem dem Client zugeordneten Warenkorb sich befindliches Produkt, eine dem Benutzer zugeordnete Kennung, eine dem Client zugeordnete Kennung oder eine Verfügbarkeit des Produkts.

Die dem Produkt zugeordnete Information, die an den Benutzer übermittelt wird, kann beispielsweise die Nennung ähnlicher Produkte umfassen. Hierfür muss folglich die Art des Produkts, für das die Aktion nicht durchgeführt wurde, bekannt sein.

Ein Verhalten des Benutzers kann beispielsweise die so genannte Verweildauer auf einer Netzwerkseite sein. Die Verweildauer gibt beispielsweise an, wie viel Zeit zwischen der Anforderung einer ersten Netzwerkseite von dem Online-Shop und einer zweiten Netzwerkseite von dem Online-Shop oder der Durchführung einer der ersten Netznahseite zugeordneten Aktion liegt. Daraus kann geschlossen werden, ob die erste Netzwerkseite für den Benutzer von Relevanz war oder nicht. Insbesondere kann daraus geschlossen werden, ob Informationen bezüglich eines oder mehrerer Produkte, die auf einer angeforderten Netzwerkseite dargestellt sind, für den Benutzer von Bedeutung sind. Ergibt die Auswertung des Verhaltens des Benutzers beispielsweise, dass eine angeforderte Netzwerkseite für den Benutzer von Interesse war, so kann vorgesehen sein, dass dem Benutzer weitere Informationen zu einer oder mehrerer der dargestellten Produkt übermittelt werden. Ergibt die Auswertung des Verhaltens des Benutzers hingegen, dass die angeforderte Netzwerkseite nicht von Interesse für den Benutzer war, kann vorgesehen sein, dass dem Benutzer Informationen bezüglich anderer Produkte übermittelt werden.

Das Verhalten des Benutzers kann ferner angeben, ob ein Benutzer ein bestimmtes Produkt bereits früher gekauft hat. Ist dies der Fall, so kann vorgesehen sein, Informationen zu anderen Produkten an den Benutzer zu übermitteln.

Ein von dem Client übermittelter Suchbegriff kann beispielsweise verwendet werden, um Informationen zu Produkten zu finden, die dem übermittelten Suchbegriff entsprechen.

Beschreibt das Kriterium ein sich in einem einem Benutzer zugeordneten Warenkorb befindliches Produkt, so kann beispielsweise angenommen werden, dass der Benutzer das Produkt in die engere Auswahl genommen hat und eine Kaufabsicht hatte. Die Nicht-Durchführung der Aktion, also beispielsweise die Nicht-Ausführung eines Bestellvorgangs, kann darauf hindeuten, dass der Benutzer beispielsweise aufgrund eines zu hohen Verkaufspreises keine Bestellung des Produkts durchgeführt hat. Die dem Produkt zugeordneten Informationen, die an den Benutzer übermittelt werden, können in diesem Fall beispielsweise ähnliche Produkte beschreiben, die preisgünstiger sind, oder Bedingungen nennen, unter denen eine Rabattierung des Produkts möglich ist.

Mittels einer dem Benutzer oder dem Client zugeordneten Kennung ist eine Identifizierung des Benutzers beziehungsweise des Clients dahingehend möglich, dass weitere, dem Benutzer beziehungsweise dem Client zugeordnete Informationen zur Auswahl einer geeigneten, dem Produkt zugeordneten Information herangezogen werden können. Derartige Informationen können insbesondere einem dem Benutzer zugeordneten Profil entnommen werden.

Wird bei der Auswahl der dem Produkt zugeordneten Information, die an den Benutzer übermittelt wird, eine Verfügbarkeit des Produkts berücksichtigt, kann beispielsweise dem Benutzer mitgeteilt werden, wann das Produkt wieder verfügbar ist.

Vorzugsweise übermittelt der Online-Shop einen Verweis zu einem weiteren Online-Shop an den Benutzer, falls das Produkt bei dem Online-Shop nicht verfügbar ist, bei dem weiteren Online-Shop jedoch verfügbar ist. Dies ermöglicht es dem Benutzer, das Produkt zu erwerben, falls er beispielsweise keine Bestellung durchgeführt hat, weil das Produkt bei dem Online-Shop nicht verfügbar war. Da der Benutzer keine erneute Suche bei mehreren anderen Online-Shops nach dem Produkt durchführen muss, werden dadurch das Kommunikationsnetzwerk und die weiteren Server entlastet.

Vorzugsweise leitet eine Aktivierung des Verweises automatisch einen Bestellvorgang ein. Dadurch kann eine noch raschere Bestellung des Produkts erfolgen, und eine weitere Reduzierung der Belastung des Kommunikationsnetzwerks erfolgen.

Gemäß einer vorteilhaften Weiterbildung des Verfahrens bezahlt der weitere Online-Shop zumindest dann eine Vergütung an den den Verweis an den Benutzer übermittelnden Online-Shop, falls der Benutzer eine Bestellung des Produkts bei dem weiteren Online-Shop durchführt. Dies stellt folglich für den Online-Shop eine Vergütung in Aussicht, falls der Benutzer aufgrund des dargestellten Verweises das Produkt bei einem anderen, also dem weiteren Online-Shop bestellt. Dadurch wird der Online-Shop animiert, einen Verweis zu weiteren Online-Shops, die möglicherweise Konkurrenten sind, an den Benutzer weiterzugeben und somit eine Verringerung der Belastung des Kommunikationsnetzwerks zu erreichen, zumindest falls der Benutzer das Produkt tatsächlich bei dem weiteren Online-Shop bestellt.

Gemäß einer weiteren vorteilhaften Ausbildung des erfindungsgemäßen Verfahrens wird automatisch eine Mitteilung von dem Online-Shop an den Benutzer übermittelt, wenn die dem Produkt zugeordnete Information oder ein dem Produkt zugeordnetes Merkmal geändert wird. Vorzugsweise beschreibt das Merkmal einen Preis, eine Farbe, eine Größe, ein Material oder eine weitere Beschaffenheit. Hat der Benutzer beispielsweise keine Bestellung des Produkts durchgeführt, weil ihm der Preis zu hoch war, kann eine Benachrichtigung des Benutzers im Falle eines reduzierten Preises eine Bestellung des Produkts durch den Benutzer zufolge haben, ohne dass der Benutzer, wie es häufig der Fall ist, immer wieder bei demselben Online-Shop oder bei anderen Online-Shops nach dem Produkt sucht, in der Hoffnung, dass dieses Produkt nun zu einem reduzierten Preis erworben werden kann.

Hat der Benutzer das Produkt nicht bestellt, weil beispielsweise die Farbe des Produkts nicht seinen Vorstellungen entspracht, kann eine Mitteilung über eine Verfügbarkeit des Produkts in der gewünschten Farbe an den Benutzer eine Bestellung des Produkts zufolge haben. Insbesondere muss der Benutzer bei dieser Ausführungsform nicht selbstständig bei dem Online-Shop oder anderen Online-Shops beziehungsweise bei Produktsuchmaschinen anfragen, ob und wo das Produkt in der von dem Benutzer gewünschten Beschaffenheit verfügbar ist. Eine Belastung des Kommunikationsnetzwerks aufgrund einer derartigen Datenübermittlung zwischen den Online-Shops und dem Client beziehungsweise der Produktsuchmaschinen und dem Client beziehungsweise dem Benutzer findet somit nicht statt.

Vorzugsweise umfasst die Beantwortung der Anfrage die Angabe mindestens eines Merkmals, bei dem im Falle der Änderung eine Mitteilung an den Benutzer übermittelt werden soll. Damit kann eine besonders gezielte Information an den Benutzer übermittelt werden.

Vorteilhafterweise wird die Mitteilung mittels einer SMS, einer e-mail oder einer MMS an den Benutzer übermittelt. Dies ermöglicht insbesondere, dass die Mitteilung von dem Benutzer auch mittels eines weiteren, dem Benutzer zugeordneten Clients empfangen beziehungsweise abgerufen werden kann.

Vorzugsweise enthält die Mitteilung einen Verweis, wobei durch Aktivierung des Verweises eine Vormerkung und/oder eine Bestellung des Produkts veranlasst wird. Dadurch kann ohne überflüssige Übertragung von Daten direkt eine Bestellung des Produkts erfolgen.

Gemäß einer anderen vorteilhaften Weiterbildung des erfindungsgemäßen Verfahrens, bei dem das Produkt einer Produktklasse zugeordnet ist, wird eine Nachricht an den Benutzer übermittelt, wenn in dem Online-Shop ein weiteres Produkt derselben Produktklasse oder einer Produktunterklasse verfügbar wird. Vorteilhafterweise ist das weitere Produkt ein Substitut oder ein Zubehör des Produkts. Dies ermöglicht erneut eine sehr gezielte Übermittlung einer Information an den Benutzer, die mit hoher Wahrscheinlichkeit von Interesse für den Benutzer ist.

Die Aufgabe wird auch durch ein Client-Server-System der eingangs genannten Art dadurch gelöst, dass das Client-Server-System Mittel zur Durchführung des erfindungsgemäßen Verfahrens aufweist.

Von besonderer Bedeutung ist die Realisierung dieser Erfindung in Form eines Computerprogramms. Dabei ist das Computerprogramm auf einem Client-Server-System, insbesondere auf einem Client und/oder auf einem als Online-Shop ausgebildeten Server ablauffähig und zur Ausführung des erfindungsgemäßen Verfahrens programmiert. In diesem Fall wird also die Erfindung durch das Computerprogramm realisiert, so dass das Computerprogramm in gleicher Weise die Erfindung darstellt wie das Verfahren, zu dessen Ausführung dieses Computerprogramm geeignet ist. Das Computerprogramm ist vorzugsweise auf einem Speicherelement abgespeichert, wobei das Speicherelement beispielsweise als Diskette, Compact Disc (CD), Digital Versatile Disc (DVD), Festplatte und/oder mindestens einer Komponente des Client-Server-Systems zugeordneter Speicherbereich ausgebildet ist. Der Speicherbereich kann insbesondere ein Random-Access-Memory (RAM), ein Read-Only-Memory (ROM) oder ein Flash-Memory sein. Das Computerprogramm kann insbesondere auch auf einem verteilten Rechnersystem ablaufen und die Funktionalität des Clients oder des Servers, beziehungsweise des Online-Shops, realisieren.

Weitere Merkmale, Anwendungsmöglichkeiten und Vorteile der Erfindung ergeben sich aus der nachfolgenden Beschreibung von Ausführungsbeispielen der Erfindung, die in der Zeichnung dargestellt sind. Dabei bilden alle beschriebenen oder dargestellten Merkmale für sich oder in beliebiger Kombination den Gegenstand der Erfindung, unabhängig von ihrer Zusammensetzung in den Patentansprüchen oder deren Rückbeziehung sowie unabhängig von ihrer Formulierung beziehungsweise Darstellung in der Beschreibung beziehungsweise in der Zeichnung. Es zeigen:
- Figur 1: eine erste Ausführungsform des erfindungsgemäßen Client-Server-Systems;
- Figur 2: eine zweite Ausführungsform des erfindungsgemäßen Client-Server-Systems;
- Figur 3: ein schematisiertes Ablaufdiagramm einer Ausführungsform des erfindungsgemäßen Verfahrens.

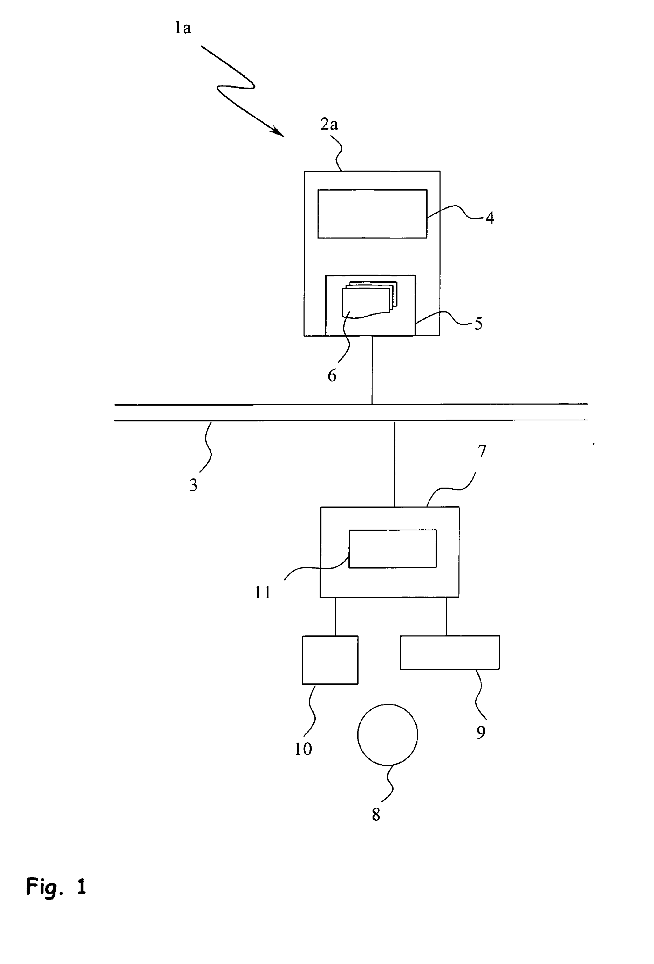

In Figur 1 ist ein Client-Server-System 1a dargestellt. Das Client-Server-System 1a umfasst einen Online-Shop 2, der mit einem Kommunikationsnetzwerk 3 verbunden ist. Der Online-Shop 2 umfasst ein Computerprogramm 4, das auf dem Online-Shop 2 abläuft, und einen Speicherbereich 5, auf dem Netzwerkseiten 6 abgespeichert sind.

Das Client-Server-System 1a umfasst ferner einen Client 7, der einem Benutzer 8 zugeordnet ist. Dem Client 7 sind eine Tastatur 9 und ein Monitor 10 zugeordnet. Auf dem Client 7 läuft ein als Browser 11 ausgebildetes Computerprogramm ab.

Der Online-Shop 2 kann beispielsweise von einem kommerziellen Anbieter von Produkten betrieben werden und sowohl in Hardware als auch in Software realisiert sein. Die von dem Online-Shop 2 zum Abruf bereitgestellten Netzwerkseiten 6 enthalten beispielsweise Beschreibungen zu Produkten, die bei dem Online-Shop 2 bestellt und gekauft werden können. In dem Speicherbereich 5 können ferner dynamisch erzeugte Netzwerkseiten 6 abgelegt werden, die in Abhängigkeit von einer Anfrage von dem Client 7 an den Online-Shop 2 erzeugt und dann an den Client 7 über das Kommunikationsnetzwerk 3, das beispielsweise als das Internet ausgebildet ist, übermittelt werden.

Der Client 7 ist beispielsweise als Personal Computer (PC) ausgebildet. Der Client 7 kann ebenso als Handheld, mobiles Telekommunikationsgerät oder PDA ausgebildet sein. Der auf dem Client 7 ablaufende Browser 11 interpretiert die von dem Online-Shop 2 an den Client 7 übermittelten Netzwerkseiten 6 und veranlasst, dass die auf den Netzwerkseiten 6 dargestellten Informationen dem Benutzer mittels des Monitors 10 dargestellt werden.

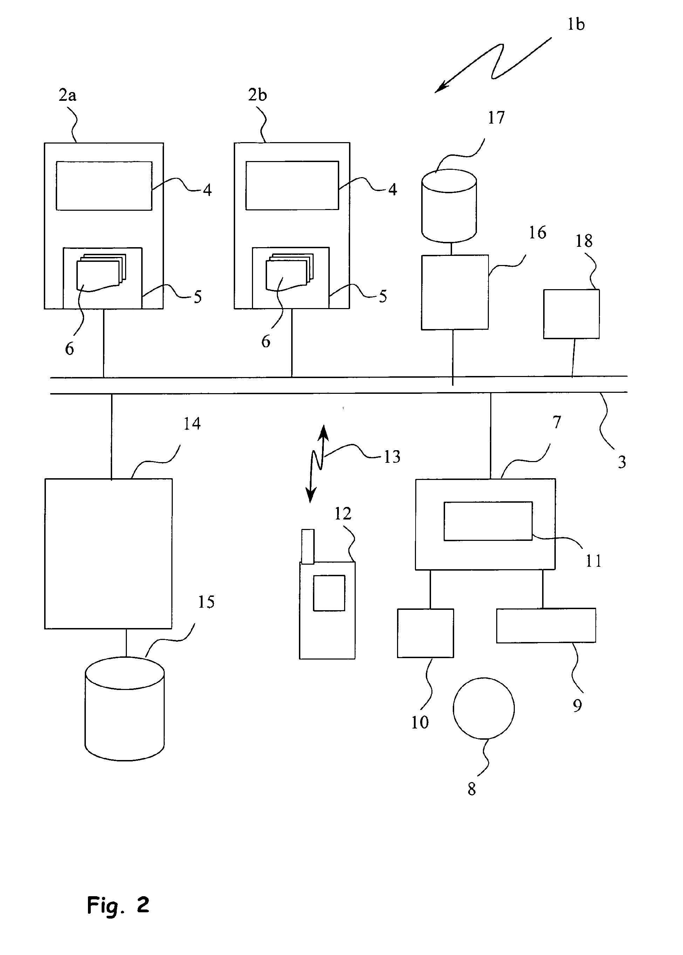

In Figur 2 ist ein Client-Server-System 1b als Beispiel für eine weitere Ausführungsform des erfindungsgemäßen Client-Server-Systems dargestellt. Die in Figur 2 dargestellten Komponenten, die den in Figur 1 dargestellten Komponenten entsprechen, sind mit denselben Bezugszeichen versehen.

Das Client-Server-System 1b umfasst neben dem Online-Shop 2a einen weiteren Online-Shop 2b. Auf dem weiteren Online-Shop 2b läuft ebenfalls ein Computerprogramm 4 ab. Der weitere Online-Shop 2b umfasst wie der Online-Shop 2a einen Speicherbereich 5, auf dem Netzwerkseiten 6 abgespeichert sind.

Das Client-Server-System 1b umfasst auch ein mobiles Telekommunikationsgerät 12, das über ein zelluläres Kommunikationsnetzwerk 13 mit dem Kommunikationsnetzwerk 3, also beispielsweise dem Internet, kommunizieren kann. Das mobile Telekommunikationsgerät 12 kann beispielsweise auch als PDA oder als Laptop ausgebildet sein.

Das Client-Server-System 1b umfasst auch eine Produktsuchmaschine 14, die mit einer Datenbank 15 verbunden ist. Die Produktsuchmaschine 14 ist ebenfalls an das Kommunikationsnetzwerk 3 angeschlossen und ermöglicht es, in Abhängigkeit von einem an die Produktsuchmaschine 14 übermittelten Suchbegriff, Informationen zu einem oder mehreren Produkten zu suchen. Das Ergebnis einer derartigen Suche wird beispielsweise in Form eines dynamisch erzeugten HTML-Dokuments an die Komponente des Client-Server-Systems 1b übermittelt, die die Suchanfrage gestartet hat. Dies kann beispielsweise der Client 7 oder das mobile Telekommunikationsgerät 12 gewesen sein. Selbstverständlich ist es grundsätzlich auch möglich, dass beispielsweise der Online-Shop 2a eine Anfrage an die Produktsuchmaschine 14 übermittelt. Für die Erzeugung des Suchergebnisses greift die Produktsuchmaschine 14 beispielsweise auf Informationen zurück, die in der Datenbank 15 abgespeichert sind.

Das Client-Server-System 1b umfasst ferner einen Profilserver 16, der Zugriff auf eine Datenbank 17 hat. Der Profilserver 16 ist ebenfalls mit dem Kommunikationsnetzwerk 3 verbunden.

Auf dem Profilserver 16 ist beispielsweise ein Profil des Benutzers 8 mittels der Datenbank 17 abgespeichert. Ein derartiges Profil umfasst beispielsweise den Namen und die Adresse des Benutzers 8, Produkte, die sich der Benutzer 8 angesehen beziehungsweise gekauft hat oder Suchbegriffe, die der Benutzer 8 beispielsweise mittels des Clients 7 oder des mobilen Telekommunikationsgeräts 12 an eine Suchmaschine, beispielsweise die Produktsuchmaschine 14, übermittelt hat.

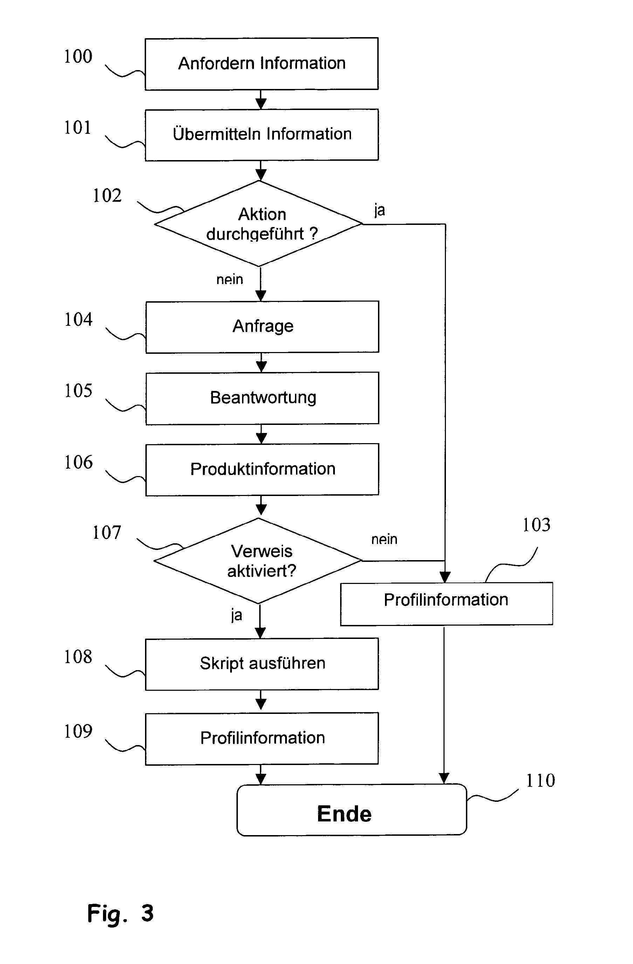

Das Client-Server-System 1b umfasst ferner einen Server 18. Die Bedeutung des Servers 18 ergibt sich aus dem in Figur 3 dargestellten Ablaufdiagramm.

In Figur 3 ist eine von vielen denkbaren Ausführungsformen des erfindungsgemäßen Verfahrens in einem schematischen Ablaufdiagramm dargestellt. Mittels des dort dargestellten Verfahrens wird insbesondere auch die Arbeitsweise der in den Figuren 1 und 2 dargestellten Client-Server-Systeme 1a, 1b erläutert.

Das in Figur 3 dargestellte Verfahren startet in einem Schritt 100. In diesem Schritt fordert der Client Informationen bezüglich eines oder mehrerer Produkte an. Hierzu kann beispielsweise der Benutzer 8 mittels des Clients 7 eine Netzwerkseite 6 von dem Online-Shop 2a anfordern, indem er beispielsweise mittels der Tastatur 9 eine dem Online-Shop 2a zugeordnete Netzwerkadresse oder eine der angeforderten Netzwerkseite 6 zugeordneten Netzwerkadresse, beispielsweise eine so genannte URL (Uniform Resource Locator), anfordert.

Die Information kann beispielsweise auch von der Produktsuchmaschine 14 angefordert werden. Hierbei kann beispielsweise eine so genannte Startseite von der Produktsuchmaschine 14 angefordert werden, die an den Client 7 übermittelt und mittels des Browsers 11 und des Monitors 10 dem Benutzer 8 dargestellt wird. Der Benutzer 8 gibt dann mittels der Tastatur 9 einen Suchbegriff in ein auf der Startseite dargestelltes Textfeld ein. Der Browser 11 und der Client 7 veranlassen daraufhin, dass dieser Suchbegriff an die Produktsuchmaschine 14 übermittelt wird. In Abhängigkeit von dem Suchbegriff erstellt die Produktsuchmaschine 14 daraufhin eine Ergebnisliste, beispielsweise unter Verwendung von in der Datenbank 15 abgespeicherten Daten. Eine derartige Ergebnisliste umfasst beispielsweise Verweise zu Netzwerkseiten 6 des Online-Shops 2a, auf denen ein Produkt oder mehrere Produkte, die von dem Benutzer 8 durch die Suchanfrage angefordert wurden, dargestellt sind. Die Ergebnisliste wird dann über das Kommunikationsnetzwerk 3 in einem Schritt 101 an den Client 7 übermittelt und dem Benutzer 8 dargestellt.

Die Information kann insbesondere auch von dem Server 18 angefordert werden. Der Server 18 kann beliebige Funktionalitäten realisieren, also als Online-Shop, Produktsuchmaschine oder Informationsserver ausgebildet sein.

Fordert der Client 7 direkt Informationen von dem Online-Shop 2a an, so wird beispielsweise eine Netzwerkseite 6 über das Kommunikationsnetzwerk 3 in dem Schritt 101 an den Client 7 übermittelt.

Der in dem Schritt 101 übermittelten Information ist eine durchführbare Aktion zugeordnet. Eine derartig Aktion kann als ein Verweis auf eine andere Netzwerkseite, ein so genannter Link, realisiert sein. Durch Aktivierung des Links, beispielsweise mittels eines dem Client 7 zugeordneten Zeigegeräts, kann der zu einer weiteren Netzwerkseite 6 führende Verweis ausgeführt und die Netzwerkseite 6 dadurch angefordert werden. Dies wird beispielsweise dadurch realisiert, dass die zunächst angeforderte Netzwerkseite 6 als HTML-Dokument realisiert ist und eine URL zu einer weiteren Netzwerkseite 6 in Form eines Verweises, also des Links, enthält. Die Aktivierung des Links entspricht der Eingabe der der weiteren Netzwerkseite 6 zugeordneten URL, was eine Anforderung der dieser URL zugeordneten weiteren Netzwerkseite 6 bewirkt.

Eine URL kann statt einer Netzwerkseite 6 auch einem ausführbaren Computerprogramm zugeordnet sein. Ein derartiges Computerprogramm ist beispielsweise als ein so genanntes Perl-Script realisiert.

Ein Perl-Script ist eine in der Programmiersprache Perl codierte Abfolge von Anweisungen. Ruft der Benutzer 8 mittels des Clients 7 eine URL auf, die einem derartigen Computerprogramm zugeordnet ist, so wird dieses Computerprogramm auf einem Server, also beispielsweise dem Online-Shop 2a oder der Produktsuchmaschine 14, oder dem Client 7 ausgeführt. Die Ausführung des Computerprogramms kann insbesondere auch eine Übermittlung von Informationen an den Client beispielsweise in Form einer weiteren Netzwerkseite 6 vorsehen. Selbstverständlich kann das der URL zugeordnete Computerprogramm auch in einer anderen Sprache, insbesondere mit einer anderen Script-Sprache, beispielsweise als Java-Script, realisiert sein.

In Abhängigkeit von der Ausführung des Scripts können weitere Aktionen ausgeführt werden. Beispielsweise können auf dem Online-Shop 2a oder der Produktsuchmaschine 14, dem Profilserver 16 oder dem Server 18 statistische Daten bezüglich des Abrufes einer bestimmten Netzwerkseite 6 erhoben werden oder es können weitere Netzwerkseiten durch den Client 7 angefordert beziehungsweise an diesen übermittelt werden.

Wird eine Netzwerkseite 6 an den Client 7 übermittelt, so kann die diese Netzwerkseite 6 übermittelnde Komponente des Client-Server-Systems 1a, 1b, also beispielsweise der Online-Shop 2a, die Produktsuchmaschine 14, der Profilserver 16 oder der Server 18, ferner ein so genanntes Cookie an den Client 7 übermitteln. Ein Cookie ist eine Menge von Informationen, die in einem dem Client 7 zugeordneten Speicherbereich abgespeichert wird. Man spricht hier auch von dem "Setzen eines Cookies". Es kann vorgesehen sein, dass automatisch ein Cookie gesetzt wird, wenn der Client 7 einen auf der Netzwerkseite 6 dargestellten Link aktiviert. Fordert der Client 7 erneut eine Netzwerkseite 6 von dem Online-Shop 2a, der Produktsuchmaschine 14, dem Profilserver 16 oder dem Server 18 an, so kann ferner vorgesehen sein, dass das Cookie zusammen mit der Aufforderung von dem Client 7 an den Online-Shop 2a, die Produktsuchmaschine 14, den Profilserver 16 oder den Server 18 übermittelt wird. Ein Cookie ist üblicherweise derart realisiert, dass es nur an die Komponente des Client-Server-Systems 1a, 1b zurückgeschickt werden kann, die den Client 7 zum Setzen des Cookies veranlasst hat.

In einem Cookie können insbesondere auch Profilinformationen abgespeichert werden, also beispielsweise wie häufig der Benutzer 8, dem der Client 7 zugeordnet ist, eine bestimmte Netzwerkseite 6 aufruft, wann er die Netzwerkseite 6 zuletzt aufgerufen hat oder von welchem Online-Shop 2a, 2b der Benutzer besonders häufig Produkte kauft.

Die durchführbare Aktion kann beispielsweise die Bestellung oder Vormerkung eines der auf der Netzwerkseite 6 dargestellten Produkte, beispielsweise durch Ausführung eines Scripts, bewirken. Eine Vormerkung kann beispielsweise dadurch realisiert sein, dass eines oder mehrere der dargestellten Produkte in einem dem Benutzer 8 zugeordneten, von dem Online-Shop 2a verwalteten Warenkorb gelegt werden.

In einem Schritt 102 wird geprüft, ob die Aktion durchgeführt wurde. Ist dies der Fall, wurde beispielsweise ein Produkt bestellt oder wurde das Produkt zumindest in einen Warenkorb gelegt, so wird in einem Schritt 103 eine Information, die die Durchführung der Aktion beschreibt, an den Profilserver 16 übermittelt und in der Datenbank 17, beispielsweise in Form eines dem Benutzer 8 zugeordneten Profils, abgespeichert. Eine derartige Profilinformation kann beispielsweise das Produkt selbst, den Zeitpunkt, die Identität des Benutzers 8, die Dauer zwischen der Anforderung der Information zwischen dem Schritt 100 und der Durchführung der Aktion beschreiben.

In einem Schritt 110 endet dann beispielsweise das Verfahren. Es ist jedoch vorstellbar, dass von dem Schritt 103 wieder zu dem Schritt 100 oder dem Schritt 101 verzweigt wird. Insbesondere ist es vorstellbar, dass auf der in dem Schritt 101 an den Benutzer 8 übermittelten Netzwerkseite 6 mehrere durchführbare Aktionen dargestellt sind und für eine oder mehrere der durchführbaren Aktionen jeweils die Schritte 102 und 103 durchgeführt werden, also von dem Schritt 103 wieder zu dem Schritt 102 zurückverzweigt wird.

Wurde in dem Schritt 102 eine oder mehrere der durchführbaren Aktionen nicht ausgeführt, so kann zu einem Schritt 104 verzweigt werden. Eine Nicht-Durchführung der Aktion kann beispielsweise auch dann vorliegen, wenn ein Produkt zwar in einen dem Benutzer 8 zugeordneten Warenkorb gelegt wurde, jedoch keine Bestellung durchgeführt wurde.

In dem Schritt 104 wird eine Anfrage an den Benutzer 8 beziehungsweise den dem Benutzer 8 zugeordneten Client 7 übermittelt. Diese Anfrage kann beispielsweise von dem Online-Shop 2a, der Produktsuchmaschine 14 oder dem Server 18 an den Client 7 übermittelt werden. Die Anfrage wird beispielsweise mittels eines so genannten Pop-Up-Fensters, einer neuen Netzwerkseite 6 oder per e-mail an den Client 7 übermittelt. Es ist ebenso vorstellbar, dass die Anfrage an irgendeinen anderen, dem Benutzer 8 zugeordneten Client, beispielsweise an das mobile Telekommunikationsgerät 12, übermittelt wird. Die Anfrage kann insbesondere auch von dem Server 18 an den Client übermittelt werden. Hierbei kann der Server 18 besonders zur Übermittlung derartiger Anfragen ausgebildet sein und bspw. mit dem Online-Shop 2a zusammenarbeiten.

Mittels der Anfrage wird beispielsweise von dem Benutzer 8 die Erlaubnis eingeholt, ob dieser weitere Informationen bezüglich des gesuchten Produkts erhalten möchte. Mittels der Anfrage erhält der Benutzer 8 beispielsweise auch die Gelegenheit anzugeben, welches Produkt er gesucht hat oder aus welchem Grund er die durchführbare Aktion, also beispielsweise die Bestellung oder Vormerkung, nicht durchgeführt hat.

In einem Schritt 105 beantwortet der Benutzer 8 mittels des Clients 7 oder des mobilen Telekommunikationsgeräts 12 die in dem Schritt 104 übermittelte Anfrage. Hierzu kann der Benutzer 8 beispielsweise mittels der Tastatur 9 in einem geeigneten Eingabefeld, das in der Anfrage vorgesehen sein kann, die Antwort textuell eingeben. Es ist ebenso vorstellbar, dass in der Anfrage vorgefertigte Antwortmöglichkeiten vorgegeben sind, die mittels eines Zeigegeräts markiert werden können. Es ist ferner vorstellbar, dass die in dem Schritt 104 an den Benutzer 8 übermittelte Anfrage einen oder mehrere Links enthält, deren Aktivierung einer Beantwortung der Anfrage bewirken.

In einem Schritt 106 wird eine Produktinformation an den Benutzer 8 beziehungsweise den dem Benutzer 8 zugeordneten Client 7 oder das dem Benutzer 8 zugeordnete mobile Telekommunikationsgerät 12 übermittelt. Die Produktinformation kann beispielsweise von dem Online-Shop 2a mittels einer Netzwerkseite 6 an den Client 7 übermittelt werden. Zur Auswahl der Produktinformation wird insbesondere die Beantwortung der Anfrage ausgewertet. Hierbei wird beispielsweise berücksichtigt, welches Produkt der Benutzer 8 bei der Produktsuchmaschine 14 gesucht hat. Ferner kann berücksichtigt werden, welches Produkt der Benutzer 8 bei dem Online-Shop 2a in den Warenkorb gelegt, jedoch nicht bestellt hat. Es wird insbesondere bei der Auswahl der Produktinformation auch berücksichtigt, welcher Art die nicht durchgeführte Aktion war.

Ferner können bei der Auswahl der Produktinformation bereits vorhandene, in einem Profil in der Datenbank 17 abgespeicherten Profilinformationen, die dem Benutzer 8 zugeordnet sind, ausgewertet werden. Hat der Benutzer 8 beispielsweise bereits ein Produkt gekauft und sich nun Informationen bezüglich eines Zubehörprodukts angesehen, dieses Zubehörprodukt jedoch nicht gekauft, so kann die Produktinformation weitere beziehungsweise alternative Zubehörprodukte vorschlagen.

Ferner können bei der Auswahl der Produktinformationen Eigenschaften des Benutzers 8, wie dessen Alter, Wohnort, Geschlecht oder von diesem früher eingegebene Suchbegriffe berücksichtigt werden. Dies erlaubt eine Auswahl von Produktinformationen, die mit hoher Wahrscheinlichkeit von besonderer Relevanz für den Benutzer 8 sind. Dadurch muss der Benutzer 8 nicht selbstständig nach derartigen Informationen suchen, was üblicherweise eine Vielzahl von Anfragen an einen oder mehrere Online-Shops 2a, 2b, Produktsuchmaschinen 14 oder weitere Server bedeuten würde und somit derartige Komponenten unnötig belasten würde beziehungsweise durch die Übermittlung entsprechender Daten das Kommunikationsnetzwerk 3 unnötig belasten würde.

Die in dem Schritt 106 an den Benutzer 8 übermittelten Produktinformationen können beispielsweise auch erst zu einem späteren Zeitpunkt an den Benutzer 8 übermittelt werden. Dies kann beispielsweise dann der Fall sein, wenn bei der in dem Schritt 105 durchgeführten Beantwortung angegeben ist, dass ein Verkaufspreis zu hoch ist und dieser zu einem späteren Zeitpunkt gesenkt wird. In diesem Fall kann eine automatische Übermittlung einer betreffenden Produktinformation an den Client 8 oder das mobile Telekommunikationsgerät 12, beispielsweise in Form einer e-mail, einer SMS oder einer MMS, übermittelt werden. Der Benutzer 8 muss folglich nicht selbstständig zu willkürlichen Zeitpunkten, beispielsweise bei dem Online-Shop 2a anfragen, wann ein bestimmtes Produkt vorhanden ist, wann ein bestimmtes Produkt für einen bestimmten Preis erwerbbar ist, ob ein bestimmtes Produkt in einer bestimmten Ausführungsform verfügbar ist, sondern derartige Informationen können ihm vollautomatisiert von dem Online-Shop 2a oder der Produktsuchmaschine 14 oder dem Server 18 übermittelt werden.

Die in dem Schritt 106 übermittelte Produktinformation kann insbesondere auch einen Link enthalten. Ein derartiger Link kann beispielsweise die Anforderung einer weiteren Netzwerkseite 6 oder die Ausführung eines Scripts bewirken.

In einem Schritt 107 wird geprüft, ob ein derartiger Link aktiviert wurde. Ist dies nicht der Fall, so wird beispielsweise davon ausgegangen, dass die diesem Link zugeordneten Informationen für den Benutzer 8 nicht relevant waren. Dies kann in Form einer Profilinformation in dem Schritt 103 an den Profilserver 16 übermittelt werden. Dort kann der Profilserver 16 dann vorsehen, dass das dem Benutzer 8 zugeordnete Profil aktualisiert und in der Datenbank 17 abgespeichert wird.

Hat der Benutzer 8 den Link aktiviert, so kann vorgesehen sein, dass eine Netzwerkseite 6, die beispielsweise weitere Informationen enthält, an den Client 7 übermittelt wird. Es ist ebenso vorstellbar, dass - wie in Figur 3 in dem Schritt 108 dargestellt - die Aktivierung des Links die Ausführung eines Scripts bewirkt. Eine derartige Ausführung des Scripts kann beispielsweise die Durchführung eines Bestellvorgangs sein. Insbesondere kann die in dem Schritt 102 nicht durchgeführte Aktion nun durchgeführt werden, beispielsweise weil ein Produkt nun den Anforderungen des Benutzers 8 vollständig entspricht.

Der mittels der Produktinformation in dem Schritt 106 an den Benutzer 8 übermittelte Verweis kann insbesondere auch einen Link zu einem weiteren Online-Shop 2b beziehungsweise einer von dem weiteren Online-Shop 2b zum Abruf bereitgestellten Netzwerkseite 6 darstellen. Eine Aktivierung des Verweises in dem Schritt 107 bedeutet dann die Anforderung einer Netzwerkseite 6 von dem weiteren Online-Shop 2b. Dies kann beispielsweise dann sinnvoll sein, wenn der Online-Shop 2a ein Produkt nicht in seinem Sortiment hat, dieses Produkt jedoch von dem Online-Shop 2b erworben werden kann. Ein derartiger Verweis ist auch dann vorstellbar, wenn der weitere Online-Shop 2b beispielsweise weitere Informationen zu einem von dem Online-Shop 2a verfügbaren Produkt hat.

Nach Ausführung des Scripts in dem Schritt 108 werden in einem Schritt 109 erneut Profilinformationen an den Profilserver 16 übermittelt. Die Profilinformationen können beispielsweise Informationen bezüglich der Ausführung des Scripts beziehungsweise der Aktivierung des Verweises beziehungsweise des zugrunde liegenden Produktes beinhalten.

In einem Schritt 110 endet das Verfahren.

Eine Vielzahl von weiteren Ausführungsformen des erfindungsgemäßen Verfahrens beziehungsweise des erfindungsgemäßen Client-Server-Systems 1a, 1b sind vorstellbar.

Beispielsweise ist es vorstellbar, dass von dem Online-Shop 2a ein neues Produkt einer Kategorie zum Verkauf angeboten wird, das derselben Kategorie entspricht, der ein Produkt angehört, das der Benutzer 8 zu einem früheren Zeitpunkt bestellt beziehungsweise zumindest in einen Warenkorb gelegt hat. Insbesondere ist es vorstellbar, dass an den Benutzer 8 dann Produktinformationen in dem Schritt 106 übermittelt werden, wenn leicht veränderte Produkte, beispielsweise dieselben Produkte in einer anderen Farbe, Größe oder zu einem anderen Preis verfügbar sind. Insbesondere ist es vorstellbar, dass der Benutzer 8 nach Erhalt der Produktinformation in dem Schritt 106 durch einfaches Aktivieren eines Verweises eine Bestellung eines Produkts ausführen kann oder zumindest ein dem Verweis zugeordnetes Produkt in einen dem Benutzer 8 zugeordneten Warenkorb abgelegt wird.

Grundsätzlich haben Client-Server-Systeme die Eigenschaft, dass sowohl ein Client als auch ein Server in Software oder in Hardware realisiert sein kann. Dies bedeutet beispielsweise, dass in dem Client-Server-System 1b der Server 18 auch in Software realisiert sein kann und auf dem Online-Shop 2a ablaufen kann. Insbesondere ist es vorstellbar, dass dem Online-Shop 2a eine Produktsuchmaschine 14 zugeordnet ist, die entweder auf dem Online-Shop 2a selbst realisiert ist oder zumindest von dem Betreiber des Online-Shops 2a betrieben wird. Ferner ist es vorstellbar, dass der Profilserver 16 auf dem Server 18 oder dem Online-Shop 2a oder der Produktsuchmaschine 14 abläuft.

## Patentansprüche

1. Verfahren zur automatischen Unterstützung eines Benutzers (8) bei der Auswahl eines Produkts in einem Online-Shop (2a; 2b), wobei der Benutzer (8) mittels eines dem Benutzer (8) zugeordneten Clients (7) eine Information von dem Online-Shop (2a; 2b) anfordert, die Information von dem Online-Shop (2a; 2b) an den Client (7) übermittelt und dem Benutzer (8) angezeigt wird und der Benutzer (8) eine der Information zugeordnete durchführbare Aktion nicht durchführt, **dadurch gekennzeichnet, dass** automatisch eine Anfrage von einem Server (18) an den Client (7) übermittelt wird, der Benutzer (8) die Anfrage beantwortet und die Antwort an den Server (18) übermittelt wird, der Server (18) die Antwort automatisch auswertet und in Abhängigkeit von dem Ergebnis der Auswertung automatisch eine dem Produkt zugeordnete Information ausgewählt und an den Benutzer (8) übermittelt wird.

2. Verfahren nach Anspruch 1, **dadurch gekennzeichnet, dass** das Produkt von dem Benutzer (8) in einen bei dem Online-Shop (2a; 2b) verwalteten, dem Benutzer (8) zugeordneten Warenkorb gelegt wird und die nicht durchgeführte Aktion die Bestellung des Produkts ist.

3. Verfahren nach Anspruch 1 oder 2, **dadurch gekennzeichnet, dass** die durch die Beantwortung der Anfrage das Produkt und/oder der Grund für die Nichtdurchführung der Aktion beschrieben wird.

4. Verfahren nach einem der vorangehenden Ansprüche, **dadurch gekennzeichnet, dass** die dem Produkt zugeordnete Information eine Verfügbarkeit, eine Lieferzeit, einen Kaufpreis oder einen Rabatt beschreibt.

5. Verfahren nach einem der vorangehenden Ansprüche, **dadurch gekennzeichnet, dass** die Auswahl der dem Produkt zugeordneten Information in Abhängigkeit von mindestens einem weiteren Kriterium erfolgt.

6. Verfahren nach Anspruch 5, **dadurch gekennzeichnet, dass** das weitere Kriterium die Art des Produkts, ein Verhalten des Benutzers (8), ein von dem Client (7) übermittelter Suchbegriff, ein in einem dem Benutzer (8) zugeordneten Warenkorb sich befindliches Produkt, ein dem Benutzer (8) zugeordnetes Profil, eine dem Client (7) zugeordnete Kennung oder eine Verfügbarkeit des Produkts beschreibt.

7. Verfahren nach einem der vorangehenden Ansprüche, **dadurch gekennzeichnet, dass** der Online-Shop (2a) einen Verweis zu einem weiteren Online-Shop (2b) an den Benutzer (8) übermittelt, falls das Produkt bei dem Online-Shop (2a) nicht verfügbar, bei dem weiteren Online-Shop (2b) jedoch verfügbar ist.

8. Verfahren nach Anspruch 7, **dadurch gekennzeichnet, dass** eine Aktivierung des Verweises automatisch einen Bestellvorgang einleitet.

9. Verfahren nach Anspruch 7 oder 8, **dadurch gekennzeichnet, dass** der weitere Online-Shop (2b) zumindest dann eine Vergütung an den Verweis an den Benutzer (8) übermittelnden Online-Shop (2a) bezahlt, falls der Benutzer (8) eine Bestellung des Produkts bei dem weiteren Online-Shop (2b) durchführt.

10. Verfahren nach einem der vorangehenden Ansprüche, **dadurch gekennzeichnet, dass** automatisch eine Mitteilung von dem Online-Shop (2a; 2b) an den Benutzer (8) übermittelt wird, wenn die dem Produkt zugeordnete Information oder ein dem Produkt zugeordnetes Merkmal geändert wird.

11. Verfahren nach Anspruch 10, **dadurch gekennzeichnet, dass** das Merkmal einen Preis, eine Farbe, eine Größe ein Material oder eine weitere Beschaffenheit beschreibt.

12. Verfahren nach einem der vorangehenden Ansprüche, **dadurch gekennzeichnet, dass** die Beantwortung der Anfrage die Angabe mindestens eines Merkmals umfasst, bei dem im Falle einer Änderung eine Mitteilung an den Benutzer (8) übermittelt werden soll.

13. Verfahren nach einem der Ansprüche 10 bis 12, **dadurch gekennzeichnet, dass** die Mitteilung mittels einer SMS, einer Email oder einer MMS an den Benutzer (8) übermittelt wird.

14. Verfahren nach einem der Ansprüche 10 bis 13, **dadurch gekennzeichnet, dass** die Mitteilung einen Verweis enthält, wobei durch Aktivierung des Verweises eine Vormerkung und/oder eine Bestellung des Produkts veranlasst wird.

15. Verfahren nach einem der vorangehenden Ansprüche, **dadurch gekennzeichnet, dass** das Produkt einer Produktklasse zugeordnet ist und eine Nachricht an den Benutzer (8) übermittelt wird, wenn in dem Online-Shop (2a; 2b) ein weiteres Produkt derselben Produktklasse oder einer Produktunterklasse verfügbar wird.

16. Verfahren nach Anspruch 15, **dadurch gekennzeichnet, dass** das weitere Produkt ein Substitut oder ein Zubehör des Produkts ist.

17. Client-Server System (1a; 1b) zur automatischen Unterstützung eines Benutzers (8) bei der Auswahl eines Produkts in einem Online-Shop (2a; 2b), wobei ein Client (7) dem Benutzer (8) zugeordnet ist, der Client (7) und ein Server (18) mit einem Kommunikationsnetzwerk (3) verbunden sind, der Online-Shop (2a; 2b) mindestens eine Information zum Abruf durch den Client (7) bereithält, der Client (7) Mittel zur Darstellung der an diesen übermittelten Information aufweist, und der Information eine durchführbare Aktion zugeordnet ist, **dadurch gekennzeichnet, dass** das Client-Server System (1a; 1b) Mittel zur Durchführung eines Verfahrens nach einem der Ansprüche 1 bis 16 aufweist.

18. Computerprogramm, das auf einem Client-Server System (1a; 1b), insbesondere auf einem Client (7) einem Online-Shop (2a; 2b) und/oder einem Server (18) ausführbar ist, **dadurch gekennzeichnet, dass** das Computerprogramm derart programmiert ist, dass ein Verfahren nach einem der Ansprüche 1 bis 17 durchgeführt wird, wenn das Computerprogramm auf dem Client-Server System (1a; 1b) ausgeführt wird.

19. Computerprogramm nach Anspruch 18, **dadurch gekennzeichnet, dass** das Computerprogramm auf einem Speicherelement abgespeichert ist, wobei das Speicherelement als Diskette, Compact Disk (CD), Digital Versatile Disk (DVD), Festplatte und/oder mindestens ein mindestens einer Komponente des Client-Server Systems zugeordneter Speicherbereich ausgebildet ist.
